# EUROPEAN PATENT APPLICATION

(11) **EP 2 180 455 A1**
(43) Date of publication of application: **28.04.2010**
(21) Application number: 09013210.1
(22) Date of filing: 20.10.2009
(51) Int. Cl.: G08B 25/01, G08B 29/24, H04M 1/725

(54) **Telecommunication portable device**

(30) Priority: 21.10.2008 IT PD20080303
(71) Applicant: Mattei, Saulle, 40033 Casalecchio di Reno (IT); Venturi, Marco, 40133 Bologna (IT)
(72) Inventor: Mattei, Saulle, 40033 Casalecchio di Reno (IT); Venturi, Marco, 40133 Bologna (IT)

(57) **Abstract**

A telecommunication portable device, usable with an inner electric energy source (**2**) to send an alarm signal to rescuers, comprising: tracking means (**3**) for the automatic detection and storing in an inner storage support of one or more exact position; a first electronic circuit (**5**) for the communication of radiofrequency signals with one or more telecommunication networks to connect the portable device (**1**) with the rescuers only when the customer is in a dangerous situation; control means (**6**) of the tracking means (**3**) to activate them at programmable time steps, and of the first electronic circuit (**5**), to activate it in a dangerous situation for the customer. The portable device (**1**) comprises data elaboration means (**7**) operatively combined with the control means (**6**) to automatically change the programmed time steps in response to the variation of the distance between an actual position and the next one so as to limit the use of the tracking means (**3**).

## Description

### Field of invention

The present invention is applicable to the fields of the emergency and of the aid and, in particular, it regards the field of the personal safety devices.

More in detail, the present invention refers to the field of the portable device used by people for call for aid.

### Background art

Starting from some years, the personal security has become an heartfelt problem for the people. It happens more time to hear, by means of information, news about aggressions and robberies against peoples during their movements.

Such problem often accompanies to another dangerous situation heartfelt by the population and constituted by the possibility to be taken ill.

Therefore, it have been devised and developed, during the last few years, a plurality of devices through which the customers send an s.o.s. signal when he is in a dangerous situation, i.e. when he is under aggression or when he is taken ill.

Said devices, as a result of their activation, send an s.o.s. radiofrequency signal generally constituted by an automatic data or voice call to the police enforcements, sanitary staff, purposely organized services, or others. Such devices, in the detail, when activated, find the position in which they are in order to supply this information to the peoples that must carry aid.

Some examples in merit are described in EP 1 447 960, US 5,838,237, WO 2005/047924, US 2007/0063853, WO 2007/004999. In particular, they describe alarm devices in which the detection of the position is executed by the telecommunication net to which they are connected or by means of a circuit for receiving and processing signals of a satellite-based positioning system, i.e. GPS, and/or by means for tracking of a short-range radio-frequency signals.

Particularly, they generally use the GPS system, but if it fails, the obviousness solution to localize the position of the customer is to use the electronic communication circuit of radiofrequency signals to detect the position of the portable device by triangulation of radiofrequency signals exchanged with the telecommunication networks with which it is connected.

Another example is described in US 2006/0217105 where this operation, i.e. the triangulation, is repeated periodically.

To do so, the device must sent radiofrequency signals with the maximum power and to verify which stations of the telecommunication network reply to it.

As a consequence, the frequency of the use of this method for localize the portable device have the drawback that it have a big power consumption that quickly exhaust the power supply of the portable device, generally constituted by one or more battery.

### Disclosure of the invention

A general object of the present invention is to overcome the above drawbacks by providing a portable telecommunication device for sending an alarm signal that is more reliable of the known devices previously cited.

Within this general object, a particular object of the invention is to realize a portable device that supplies the indication of the position of a customer in a dangerous situation limiting the power consumption in order to concur to safeguard the duration of the power supply.

Another object of the device is to supply the greater number of information to the rescuers in order to concur to find quickly the customer and to ensure the best rescue.

These and other objects, as better explained hereafter, are fulfilled by a telecommunication portable device usable with an internal power supply for sending an alarm signal to rescuers in a dangerous event for the customer, as defined in the main claim. The other claims contain detail elements of the invention.

Particularly, the portable device will be able to comprise tracking means for the automatic detection and the storing in an internal storage support of one or more positions of the portable device.

Typically, the tracking means could be constituted by receiving and elaboration circuits of signals of a satellite position system, by electronic circuits for transmitting and receiving radiofrequency signals with or more telecommunication networks in order to find the position of the portable device by means of triangulation, or others.

The electronic circuits for transmitting and receiving radiofrequency signals could be used in order to connect the portable device with the rescuers when the customer is in a dangerous situation.

According to another aspect of the invention, the portable device will be able to comprise control means of the tracking means, in order to activate them at programmed time steps, and of the electronic telecommunication circuits, in order to activate them in a dangerous situation for the customer and sending to the rescuers, through the alarm signal, one or more stored positions present in the internal storage support.

In other words, the sending of information to track and find the portable device and, with it, of the customer, it happens only when the customer is in a dangerous situation. Since such sending of information cause a big power consumption, this concurs to preserve the charge of the internal power supply.

However, according to another aspect of the invention, the portable device will be able to comprise data elaboration means operatively associated to the control means to automatically vary the programmed time steps of activation of the tracking means as consequence of the variation of distance between a position of the portable device and that successive one. This is made in order to limit the use of the tracking means and to decrease, therefore, the energy consumption of the internal power supply.

It is observed, therefore, than the proposed portable device is distinguished from the prior art devices for an intelligent use of the power resources. In fact, the use of the tracking means to localize the position of the portable device and, particularly, of the electronic telecommunication circuits as tracking means, it is optimized by the data elaboration means. They analyze the data related to the localization of the portable device and vary the frequency of use of the tracking means. This fact concurs to limit the power consumptions to the minimum extending, therefore, the operating time of the portable device. Consequently, it is improved, for duration, the ability to have an indication of the position of the customer.

As anticipated in the description of the state of the art, it happens that it is not possible to detect an exact point where is localized the portable device, but only an area. The portable device, therefore, could be supplied of an internal storage support in order to store the last position found that corresponds to an exact localization of the device and, with it, of the customer. In this way it is succeeded to direct with precision the rescuers. In fact, in case it was not possible to detect an exact localization, but only an area, in the alarm signal will be inserted not only the information about the area, but also the last exact position detected, or a series thereof, from which to start searching the customer. It is presupposed in fact that the customer can be near that exact position inside the area. It is obvious that this increases the possibility to find the customer quickly.

As discussed below, the proposed portable device will be able to comprise also other tracking means to use in combination with those described above. All that is in the way to assure the best information to localize the customer with the contextual necessity to optimize the power consumption increasing the functionality of the portable device without to replace the internal power supply.

The objects previously listed are also met by a method control of a portable device as described above, comprising the following steps:
- acquisition, at programmable time steps, of the actual position of said portable device by tracking means;
- storing of the actual position of the portable device in the internal storing support if it is detected an exact localization, the content of the internal storage support being sent to rescuers only when the customer is in a dangerous situation;
- selective sending, in a dangerous situation for the customer, of an alarm signal, by means of the first electronic circuit, to the rescuer, said alarm signal comprising data relating to the actual position detected and data related to the exact localizations present in the internal storage support at least when the last actual position is an area.

The method is characterized for the fact to comprise also, during the acquisition phase, a phase of elaboration, by the data elaboration means, of the detected actual positions to vary the programmed time steps in accord to the variation of the distance between the actual position and that successive so as to limit the use of the tracking means and decrease, therefore, the power consumption of the internal power supply increasing its life.

### Short description of the designs

Further features and advantages of the invention will be more apparent from the detailed description of a few preferred, non-exclusive embodiments of the telecommunication portable device of the invention, which are described by way of non-limiting examples with the help of the annexed drawings, in which:
**FIG. 1** shows the portable device of the invention;
**FIG. 2** shows the control method of the invention.

### Detailed description of an example of preferred realization

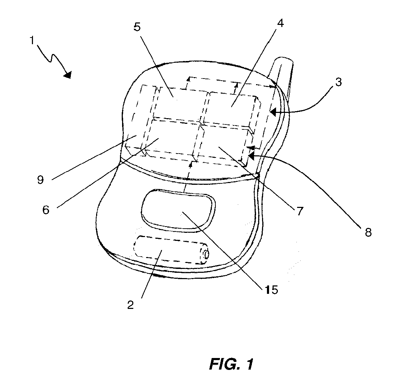

With reference to fig. 1, a telecommunication portable device **1** usable with an internal power supply **2** for sending an alarm signal to rescuers in a dangerous event for a customer due to, as an example, aggressions, robberies, taken ill or similar situations.

It is observed that the portable device **1** comprises tracking means **3** for the automatic detection and storing, in a internal storage support, of one or more actual positions of the portable device **1** in terms of longitude, latitude and altitude. In other words, according to an aspect of the invention, the device **1** is designed to tracking and store the movements of the customer.

According to an aspect of the invention, the device **1** comprises at least a first telecommunication electronic circuit **5** of radiofrequency signal connectable with one or more telecommunication networks to communicate with rescuers exclusively when the customer is in a dangerous situation. In other words, since the communications with the rescuers have a big power consumption and since the rescuers do not necessity of indications before it happen a dangerous situation for the customer, the sending of the actual positions detected will be executed only when the dangerous situation will happen.

The first electronic circuit **5** may be, as an example, of the GSM or UMTS type for mobile phone, or of the type used for various telecommunications networks, such as PAN, LAN, MAN, WAN networks. It is known that generally the access to the telecommunication networks is authorized only to who is in possession of particular devices or expressed authorizations. The case of the mobile networks is emblematic: only having an activated SIM it is possible to accede to the network of an operator, that it has released such SIM, and to the services that it supplies. However, it is known that it is possible to make emergency calls also without to authenticate itself (without therefore the insertion of the pin code) to the network of an operator. Therefore the object of the invention, because an emergency device, could contain an identification code of the customer to send in case of emergency, also without having the SIM, so as to make its use independent from a specific operator.

According to an other aspect of the invention, portable device **1** comprises control means **6** of the tracking means **3** in order to activate them at programmed time steps. The same control means **6** are associated also to the first electronic circuit **5** in order to activate it in case of danger for the customer and to send to the rescuers, through the alarm signal, the positions stored into the internal storing support.

About the tracking means **3,** typically they comprise at least a second electronic circuit **4** for the receipt and the elaboration of signals of a satellite position system, like as an example the Global Positioning System (GPS).

However, it is known that the second electronic circuit **4** he is not sufficient to always guarantee the location of the customer calling for aid. If in fact it is in places like multistory buildings, under sheds, wooded areas or similar, said second electronic circuit **4** could fail to its object.

Therefore, according to another aspect of the invention the tracking means **3** comprise also the first electronic circuit **5** activable by the control means **6** in order to detect the position if the second electronic circuit **4** fails in that. The detection is executed, in particular, by means of a triangulation procedure of the radiofrequency signals exchanged with the telecommunication networks with which it is connected.

As wrote above, such operation has the drawback to have a big power consumption since the first electronic circuit **5** must send radiofrequency signals with the maximum power. This involves the risk, if the operation is made frequently or for a long time, to exhaust the internal power supply **2.** The same risk happen also if the detection of the position is executed by the second electronic circuit **4.** Even if it have a lower power consumption, its repeated use decrease the duration of the charge of the internal power supply **2.**

In order to overcome such drawback, according to an aspect of the invention the portable device **1** comprises data elaboration means **7** operatively associated to the control means **6** in order to automatically vary the programmed time steps at which activate the tracking means **3** as consequence of the variation of distance between an actual position detected of the portable device **1** and that subsequent. This concurs, advantageously, to limit the use of the tracking means **3** and decrease, therefore, the energy supplied by the power supply **2** increasing its life.

In other words, every time it is detected an actual position, the data elaboration means **7** analyzes the position data with the position data of the previous actual position detected in order to calculate the velocity of portable device **1.** As a result of such analysis, they change the frequency use of the tracking means **3** in order to detect the actual position only at time steps in which such information effectively have an appreciable variation in respect of the previous the actual position. It is obvious that an optimized power consumption of electric power increase the life and the efficiency of the portable device **1** of the invention. In effects, in this manner it is increased the life od the power supply **2** increasing, consequently, the possibilities to track and find the customer calling for aid.

According to another aspect of the invention, the control means **6** and the data elaboration means **7** are realized by a programmable logical unit **8** whose object will be, more in general, to totally control the portable device **1.**

It is already said previously that sometimes the position of the portable device **1** detected by triangulation is not a point, but an area. In order to increase the information supplied to the rescuers and, therefore, to increase the possibility to find quickly the customer, every time it is possible to detect an exact point as actual position, the data position is stored into the internal storing support.

More in detail, every time that the programmable logical unit **8** verify that the actual position detected is a point, it store the data position the internal storing support.

In such a way, when it generates the alarm signal, it can insert with the information of the detected area, also those regarding the last detected actual position corresponding to a point and, if present, also all the previous detected actual positions. The rescuers, therefore, will have more possibilities to track the customer. Obviously, since all the data are sent with the alarm signal, the power consumption for these sending is optimized being absent energetically expensive sending of data before it happen a dangerous situation.

According to another aspect of the invention, the tracking means **3** comprise also sensor means **9** for detecting the altitude position. They generally are constituted by an atmospheric pressure altimeter.

Searching a customer, in fact, the altitude information has equal importance of that latitude and longitude information. In the case of use of the portable device **1** in a multistory building, the receiving and elaboration circuit **4** cannot supply altitude information. Then, the programmable logical unit **8** can obtain such information by the sensor means **9.**

However, these last ones, especially if they are an atmospheric pressure altimeter, they are subjected to lose the calibration or to supply wrong data since they are subjected to the local atmospheric conditions.

In order to overcome such drawback, the portable device **1** comprises adjusting means suitable for obtain an altitude information by the receiving and elaboration circuit **4** with which to carry out a calibration of the sensor means **9.**

About the calibration, the adjusting means can have different embodiments. Due to the presence of the programmable logical unit **8,** the simplest embodiment is of the software type. Particularly, the programmable logical unit **8** executes, at regular time instants, a detection of the altitude data by the receiving and elaboration circuit **4** and it associates such value to the value detected by sensor means **9.**

According to another aspect of the invention, the portable device **1** comprises also a third electronic circuit, not represented in figures, for the receiving and sending of short range radiofrequency signals to use, as an example, when the tracking means **3** previously described fail to detect the exact position of the customer.

Such short range signal is used as radio beacon. The rescuers will be provided of a detecting device suitable for detect the short range signal with which determine the position of the portable device **1.**

Really, the third electronic circuit have also another usefulness. When the portable device **1** is not inside of the range of a telecommunication network, the short range signal can be used as an alternative vehicle for the call for aid. If in the range of the third electronic circuit there is another device that can receive said signal, preferably an equivalent portable device, it can concur on transmitting the call for aid to the rescuers.

More in detail, the third electronic circuit can operate on a emergency frequency band that, in Italy, can be that around the 457 KHz. Other usable frequency bands are, as an example, near 2,4 GHZ and near 5,5-5,8 GHz.

According to another aspect of the invention, the alarm signal comprises at least an univocal code of identification of the customer. In such way it is possible, for the rescuers, to know the name of the customer which lend aid and also to have other detailed information. This is useful particularly in a disease event.

In this last situation it is also useful to know, in the moment of the reception of the call for aid, of the biometrical data of the customer. Therefore, the portable device **1** comprises also detecting means **15** of such biometrical data in order to transmit them with the alarm signal. They can have only the cardiac pulsations or also the blood pressure of the customer, the corporeal temperature or others. In the figures the biometrical data detecting means **15** have been represented by a slab, but it does not want to be a limitation for different embodiments. As an example, they can be constituted by a plurality of sensors some of which can be applied to the body of the customer and being connected with the portable device **1** via cable or, more comfortably, by a connection without threads.

Since the alarm signal can be sent also through the third electronic circuit, it is obvious that through the same it is possible to send previously cited data of the customer.

Another aspect of the invention regards the activation of the call for aid by the described portable device **1.** It typically happens by means of at least a push-button that can be disposed on the same container of the portable device **1** or, in another embodiment, in a different container communicating with the portable device **1** by means of radiofrequency signals, like Bluetooth or others.

This concurs to a comfortable use of the portable device **1** of the invention.

The portable device **1** can be used together an identical device and it will be activated when the first will be damaged.

Such possibility is favourable in case of an aggression during which the aggressor can damage the portable device **1.** In such case, the second portable device enters in action and it continues to send the call for aid.

Opportunely, the portable device **1** of the invention can also be activated from remote by means of an input signal sent by rescuers. There will be situations, as an example in the event of a sick lies customer but not only, in which the customer cannot active the device **1.** In such case, therefore, the portable device **1** can be activated also in remote in order to allow a localization of the customer, eventually by authorization of the competent authorities.

According to another aspect of the invention, the portable device **1** is a device like a remote control used for opening and closing of gates, but in a different embodiment it can also integrated inside a mobile phone.

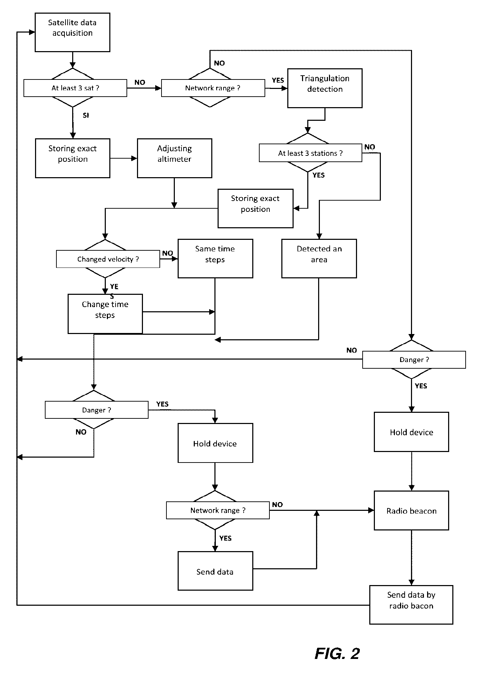

Operatively, there is, as shown in fig. 2, an input phase, at programmed time steps, for the acquisition of satellite data by means of the second electronic circuit **4** in order to detect an exact localization in terms of longitude, latitude and altitude.

If such operation has success, the programmable logical unit **8** inserts said exact localization in the storage support and uses it also to carry out the calibration of the sensor means **9.** Thus it will be increased the performance of the device **1** and the quality of the data supplied to the rescuers for finding the customer quickly.

If the detection fails and the portable device **1** find one or more telecommunication networks with which to couple itself, the control means **6** will make the same detection, at programmed time steps, by triangulation of the radiofrequency signals exchanged between the first electronic circuit **5** and such telecommunication networks.

Such detection method gives back the indication of a single point if there are at least three stations available of the network. In the event this happens, the programmable logical unit **8** memorizes the exact localization in the storage support.

In any case, the localization steps of the portable device **1** of the invention will be repeated to the aim to maintain upgraded the data about the position of the customer. Consequently, according to the invention, the data elaboration means **7** execute the elaboration of the found localizations in order to vary the programmed time according to the variation of distance between a position detected and that successive. As said, this concurs to improve the performances of the proposed device **1.**

According to an aspect of the invention, this last operation will be executed only when it is succeeded to identify an exact localization. In fact, in case it was succeeded to detect only an area, it would be better to insist with the same detection frequency of the data in order to try to find an exact localization.

According to a possible embodiment, however, the programmable logical unit could increase the detection frequency of the data decreasing the duration of the aforesaid programmed time steps in order to find as soon as possible an exact localization of the portable device.

According to another embodiment, the data elaboration means **7** could however execute the elaboration of the found localizations in order to vary the programmed time steps in agreement with the variation of distance between a detected area and the next one.

From fig. the 2 it is observed that, in any case, the next step is the control if it has been activated or it is already active a call for aid. In the negative case, it is continued the detection of the data in order to localize the portable device **1**.

In the positive case, that is in the event of a call for aid, the programmable logical unit **8** commands the sending of an alarm signal by means of the first electronic circuit **5** in case the portable device **1** is in the range of a network. Contextually, it actives also the third electronic circuit, that is the radio beacon, and sends through it the same alarm signal.

In case the portable device **1** is not in the range of a network, it will be activated only activated the third electronic circuit.

In any case in the alarm signal it will be inserted all the available data of the customer, comprising those biometrical, and of the localization.

This last correspond to the exact localization, if available, or to the altitude, the detected area and the last exact localization stored.

The portable device **1** will be blocked in the emergency state till reaching of the aids and it continues to detect data in order to find own position and sending it with the alarm signal.

Due to the above, the telecommunication portable device of the invention fulfil all the intended objects and, particularly, overcome the drawbacks of the prior art being more reliable then the known devices.

Particularly, the proposed portable device give back the best indication of the position of the customer limiting, at the same time, the power consumption of the power supply in order to concur to supply the aforesaid indication for a long time.

Moreover, the portable device of the invention supplies a considerable amount of information to the rescuers in order to concur to quickly find the customer and to assure the best succours.

The portable device of the invention is susceptible of a number of changes and variants, within the inventive principle disclosed in the appended claims. All the details may be replaced by other technically equivalent elements, and the materials may be different depending on different needs.

While the portable device has been described with particular reference to the accompanying figures, the numerals referred to in the disclosure and claims are only used for the sake of a better intelligibility of the invention and shall not be intended to limit the claimed object in any manner.

## Claims

1. A telecommunication portable device usable with an inner electric energy source **(2)** to send an alarm signal to rescuers in a dangerous event for a customer, said portable device **(1)** comprising:
- tracking means **(3)** for the automatic detection and storing in an inner storage support of one or more exact position of said portable device **(1)** as longitude, latitude and altitude information;
- at least a first electronic circuit **(5)** for the communication of radiofrequency signals with one or more telecommunication networks to connect said portable device **(1)** with the rescuers only when the customer is in a dangerous situation;
- control means **(6)** of said tracking means **(3)** to activate them at programmable time steps, and of said first electronic circuit **(5),** to activate it in a dangerous situation for the customer and sending to the rescuers, by said alarm signal, one or more actual position stored in said inner storage support,
**characterized in** comprising data elaboration means **(7)** operatively combined with at least said control means **(6)** to automatically change said programmed time steps in response to the variation of the distance between an actual position of said portable device **(1)** and the next one so as to limit the use of said tracking means **(3)** and to decrease the power consumption of said inner electric energy source **(2)** so increasing her life.

2. Portable device as claimed in claim 1, **characterized in that** said tracking means **(3)** comprise at least one second electronic circuit **(4)** for the receiving and the elaboration of signals of a satellite position system suitable to determine said actual position of the user as longitude, latitude and altitude information.

3. Portable device as claimed in claim 1 or 2, **characterized in that** said tracking means **(3)** comprise also said first electronic circuit **(5)** suitable to be activated by said control means **(6)** to detect said actual position, when said second electronic circuit **(4)** fails **in that**, by triangulation of said radiofrequency signals exchanged with said one or more telecommunication networks.

4. Portable device as claimed in anyone of the preceding claims, **characterized in that** said tracking means **(3)** comprise sensor means **(9)** for the detection of the elevation share.

5. Portable device as claimed in claim 4, **characterized in that** said at least a second electronic circuit **(4)** is suitable to obtain an elevation information with which make the adjusting of said sensor means **(9)** for the detection of the altitude position.

6. Portable device as claimed in claim 4 or 5, **characterized in that** said sensor means **(9)** for the detection of the altitude position comprise a pressure altimeter.

7. Portable device as claimed in anyone of the preceding claims, **characterized in** comprising at least a third electronic circuit for the communication of low range radiofrequency signals.

8. Portable device as claimed in anyone of the preceding claims, **characterized in that** said control means **(6)** and said data elaboration means **(7)** are made by a programmable logic unit **(8).**

9. Portable device as claimed in anyone of the preceding claims, **characterized in** comprising detection means of biometrical data of the user to send by means of said alarm signal.

10. Method for control of a portable device **(1)** as claimed in anyone of the preceding claims, comprising the following steps:
- acquisition, at programmable time steps, of the actual position as longitude, latitude and altitude information of said portable device **(1)** by means of said tracking means **(3);**
- memorization of said actual position of said portable device **(1)** in said inner storage support if it is obtained an exact localization, the contents of said inner storage support being suitable to be sent to the rescuers only in a dangerous event for the customer;
- selective sending, in a dangerous event for the customer, of an alarm signal, by means of said first electronic circuit **(5),** to the rescuers, said alarm signal comprising data relating to the detected actual position and to the exact localizations stored onto said inner storage support at least when the last actual position detected is an area,
**characterized in** comprising, during said acquisition step, an elaboration step, by means of said data elaboration means **(7),** of the actual positions detected to change said programmed time steps in accord with the variation of the distance between an actual position of said portable device **(1)** and the next one so as to limit the use of said tracking means **(3)** and to decrease the power consumption of said inner electric energy source **(2)** so increasing her life.
